**Europäisches Patentamt**

**European Patent Office**

**Office européen des brevets**

(19)

(11) Publication number : **0 482 885 A1**

## (12) EUROPEAN PATENT APPLICATION

(21) Application number : **91309748.1**

(22) Date of filing : **22.10.91**

(51) Int. Cl.⁵ : **G09F 9/37**

(30) Priority : **22.10.90 ZA 908433**

(43) Date of publication of application :
**29.04.92 Bulletin 92/18**

(84) Designated Contracting States :
**AT BE CH DE DK ES FR GB GR IT LI LU NL SE**

(71) Applicant : **Meyer, Josewes Nicolaas**
**6 Rooikat Street, Van Riebeck Park**
**Kempton Park, Transvaal (ZA)**

(72) Inventor : **Khoury, Edward Joseph**
**49 Rae Frankel Street**
**Brackenhurst, Transvaal (ZA)**

(74) Representative : **Gordon, Michael Vincent**
**GILL JENNINGS & EVERY 53-64 Chancery**
**Lane**
**London WC2A 1HN (GB)**

(54) **Display device.**

(57)    There is provided a display device (10) comprising a display surface (12), a plurality of openings (24) in the display surface (12), arranged to form a figure 8 or two or more figures 8 arranged side by side and a flat insert (26) in each opening (24). The flat insert (26) is rotatable about 180° within the opening (24) between a first position in which it presents a surface which blends with a display surface (12) and a second position in which it presents a surface which is distinct from the display surface (12).

FIG 1

This invention relates to a display device.

In many situations it is desirable to present information in the form of letters or numerals in public areas or other places so that they are easily read from a distance. Conventionally, such letters or numerals are painted or otherwise permanently written on display boards at the desired location. In many situations it is necessary to frequently change these letters or numerals on such display boards. For example, the purchasing price of various items sold in a shop will vary from time to time or when information is presented at sporting fixtures which requires periodic updating. Typically when letters and figures are changed on display boards, the changes are often time consuming and may be messy and untidy.

According to the present invention there is provided a display device, comprising a display surface, a plurality of openings in the display surface arranged to form a figure 8 or two or more figures 8 arranged side by side, a flat insert in each opening which is rotatable about 180° within the opening between a first position in which it presents a surface which blends with the display surface, and a second position in which it presents a surface which is distinct from the display surface.

Typically the inserts are rotatable in the openings by means of a projection located on opposite sides of each insert and a complementally formed recess in opposite edges of each opening. The projections and complementally formed recesses may be square or rectangular in cross section.

According to another aspect of the invention there is provided a unit for use in manufacturing a display device as described above comprising a plurality of the inserts joined to each other by frangible connections in the same form as the arrangement of the openings. Preferably the inserts and the connections are both made of a plastics material.

Figure 1 illustrates a plan view of an example of a display device of the invention;

Figure 2 is a section along the line 2-2 of Figure 1; and

Figure 3 is a plan view of a unit for use in manufacturing the display device of Figure 1.

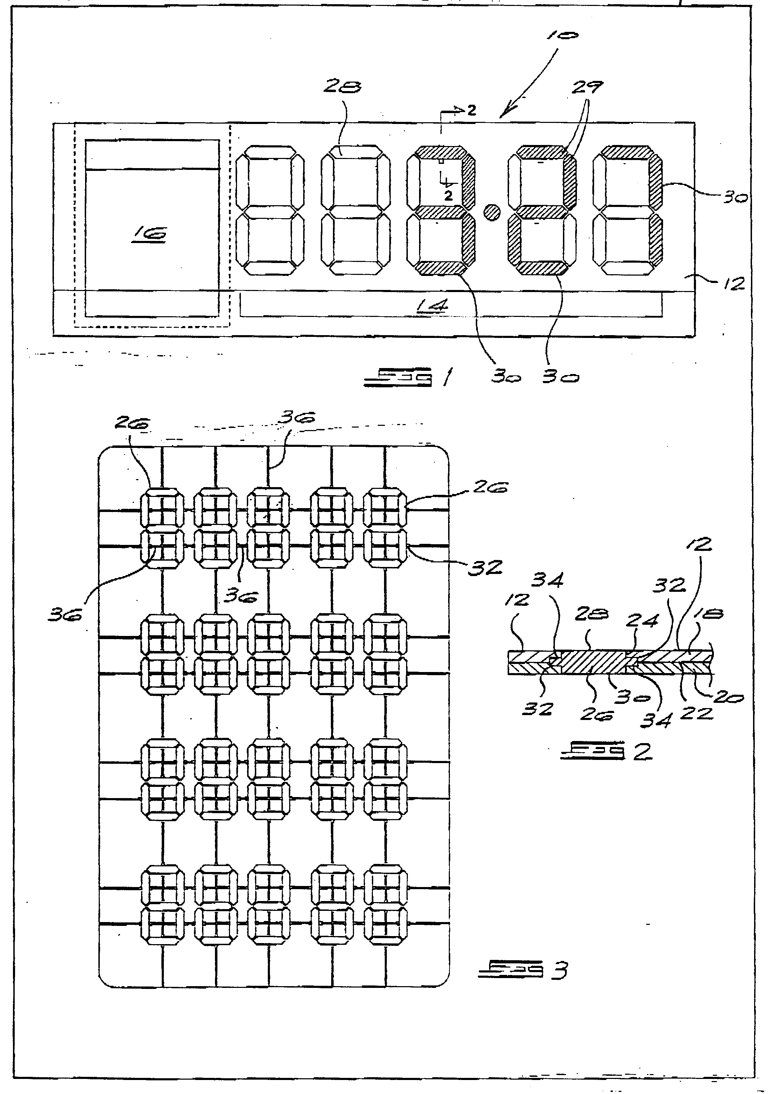

The drawings illustrate an embodiment of the invention. Referring to Figure 1 of these drawings, there is shown a display device 10 which has a rectangular display surface 12. The display surface 12 has a general background of colour and areas indicated at 14 and 16 for carrying advertising or other material. The device comprises two sheets 18, 20 of plastic bonded together along interface 22 - see Figure 2.

A plurality of openings 24 are formed in the sheets 18,20 and extend therethrough. Located in each recess is a flat elongate insert 26 of the same shape. Each insert has one surface 28 of the same colour as that of the display surface 12 and an opposite surface 30 of a different colour or otherwise distinct from the surface 12. Each insert has projections 32 which are received in complementally shaped recesses 34 and are rotatable in these recesses. In one preferred form of the invention, the projections and recesses both have a square or rectangular cross-section. With this configuration, the projections can be rotated through a number of discrete stages and there is a positive, but disengageable, locking fit at each stage. The inserts have triangular shaped opposite ends 29 which provide neat corners between adjacent inserts.

The inserts are rotatable about 180° within the openings 24 between a position in which the surface 28 is displayed in the display surface 12 and a position in which the surface 30 is displayed in this display surface of the device. The surfaces 28 blend with the display surface and be substantially indistinguishable from it, whereas the surfaces 30 will be distinct from the display surface. The effect of this is that by arranging the surfaces 28, 30 of the various inserts in an appropriate manner, numbers or letters can be displayed on the display surface. One such arrangement is illustrated by Figure 1. This arrangement can readily be changed by simply rotating any of the inserts and displaying a different arrangement of distinct surfaces 30.

It will be appreciated that the display unit provides an efficient, effective and neat way of indicating for example, the price of an item at a shop or information at a sporting event as the need arises.

Figure 3 illustrates a unit which may be used for manufacturing the display device of Figure 1. This unit is injection moulded and consists of plastic inserts 26 joined to each other by frangible plastic connections 36 in a plurality of rows. After injection moulding, one side of the unit is screened with a colour which is distinct from the colour of the display surface 12. The inserts of each row are arranged in a form which is the same as the openings in the display unit. In manufacturing the display unit, a row of inserts can be removed from the unit of Figure 3 and placed on a sheet 20 so that the inserts are in register with the openings. The various frangible connections 36 are thereafter removed. A sheet 18 is then placed in position again registering the inserts with the openings, and bonded to the sheet 20.

## Claims

1. A display device (10), comprising a display surface (12), a plurality of openings (24) in the display surface (12) arranged to form a figure 8 or two or more figures 8 arranged side by side, a flat insert (26) in each opening (24) which is rotatable about 180° within the opening (24) between a first position in which it presents a surface which blends with the display surface (12), and a second position in which it presents a surface which is distinct from the display surface (12).

2. A display device (10) according to claim 1 wherein the inserts (26) are rotatable in the openings (24) by means of a projection (32) located on opposite sides of each insert and a complementally formed recess (34) in opposite edges of each opening (24).

3. A display device (10) according to claim 2 wherein the cross section of each projection (32) and complementally formed recess (34) is rectangular.

4. A display devive (10) according to claim 2 wherein the cross section of each projection (32) and complementally formed recess (34) is a square.

5. A display device (10) according to any one of the preceding claims wherein each insert (26) is elongate along its axis of rotation.

6. A display device (10) according any one of the preceding claims wherein the ends (29) of each insert (26) which are in contact with the display surface (12) are triangular shaped.

7. A unit for use in manufacturing a display device according to any one of the preceding claims comprising a plurality of the inserts (26) joined to each other by frangible connections (36) in the same form as the arrangement of the openings (24).

8. A unit according to claim 7 wherein the inserts (26) and frangible connections (36) are both made of a plastics material.

FIG 1

FIG 2

FIG 3

**European Patent Office**

## EUROPEAN SEARCH REPORT

Application Number

EP 91 30 9748

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | AU-B- 541 448 (CHAPMAN) <br> * figures 1-3; page 3, line 26 - page 5, line 32 * | 1,5,6 | G 09 F 9/37 |
| A | | 2-4 | |
| A | DE-A-3 143 412 (IDEE DESIGN GMBH) <br> * figures 1-3; page 6, line 11 - page 7, line 14 * | 1,2,5,6 | |
| A | EP-A-0 031 033 (TAMBURINI) <br> * figures 1-6; page 4, line 1 - page 6, line 2 * | 1,2,5,6 | |

TECHNICAL FIELDS SEARCHED (Int. Cl.5)

G 09 F

The present search report has been drawn up for all claims

| Place of search | Date of completion of the search | Examiner |
|---|---|---|
| BERLIN | 18-12-1991 | TAYLOR P I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)